# EUROPÄISCHE PATENTANMELDUNG

(11) **EP 1 270 350 A2**
(43) Veröffentlichungstag der Anmeldung: **02.01.2003**
(21) Anmeldenummer: 02012248.7
(22) Anmeldetag: 04.06.2002
(51) Int. Cl.: B60S 1/04, G12B 5/00

(54) **Justiereinrichtung und zugehöriges Betätigungswerkzeug**

(30) Priorität: 23.06.2001 DE 10130411
(71) Anmelder: DaimlerChrysler AG, 70567 Stuttgart (DE)
(72) Erfinder: Bayer, Benjamin, 71101 Schönaich (DE); Gamisch, Roland, 71034 Böblingen (DE); Krämer, Bernd, 71088 Holzgerlingen (DE)

(57) **Zusammenfassung**

Die Erfindung betrifft eine Einrichtung zum Justieren einer Relativlage zwischen zwei Bauteilen (2,3), mit einem Trägerteil (4), das an dem einen Bauteil (2) befestigt ist und in einem Halterabschnitt (7) eine Durchgangsöffnung (8) aufweist, und mit einer Einstellschraube (9), die ein Außengewinde (10) aufweist, im Bereich ihres einen Endes (11) in ein am anderen Bauteil (3) fest angeordnetes Innengewinde (12) eingreift, an ihrem anderen Ende (15) Drehbetätigungsmittel (16) aufweist, zwischen ihren Enden (11,15) einen radial abstehenden, festen Bund (17) aufweist, auf einer vom anderen Bauteil (3) abgewandten Seite des Bundes (17) die Durchgangsöffnung (8) durchdringt und auf einer vom anderen Bauteil (3) abgewandten Seite des Halterabschnitts (7) eine Kontermutter (18) trägt, wobei Bund (17) und Kontermutter (18) zum Fixieren einer Relativlage zwischen Einstellschraube (9) und Trägerteil (4) den Halterabschnitt (7) zwischen sich axial verspannen.

## Beschreibung

Die Erfindung betrifft eine Einrichtung zum Justieren einer Relativlage zwischen zwei Bauteilen sowie ein Werkzeug zum Betätigen einer derartigen Justiereinrichtung.

In vielen Bereichen der Technik, ist es erforderlich, die Relativlage zwischen zwei Bauteilen relativ genau einzustellen bzw. justieren. Im Rahmen einer Serienfertigung werden die beiden Bauteile bei einer Vormontage bzw. beim Einbau zunächst nur relativ grob zueinander positioniert. Die Einstellung der gewünschten Relativlage, also die Justierung der beiden Bauteile, erfolgt dann in einem nachfolgenden Fertigungsschritt. Um eine derartige Einstellung realisieren zu können, sind Justiereinrichtungen der eingangs genannten Art erforderlich, die eine grobe Voreinstellung und eine Feineinstellung sowie eine Fixierung der aufgefundenen Justierstellung ermöglichen.

Beispielsweise muß in einem Kraftfahrzeug, insbesondere in einem Personenkraftwagen, eine Scheibenwischerträgereinheit relativ genau im Fahrzeug positioniert werden. Eine solche Scheibenwischerträgereinheit haltert den oder die Scheibenwischer des Fahrzeugs, wobei es auf eine möglichst exakte räumliche Ausrichtung der Scheibenwischerachse ankommen kann. Insbesondere bei modernen Flachbalken-Scheibenwischern kommt es auf eine möglichst genaue räumliche Ausrichtung des Scheibenwischers bzw. dessen Wischerachse an. Aufgrund von Herstellungstoleranzen muß die Scheibenwischerträgereinheit nach ihrem Einbau justiert werden. Es besteht daher das Bedürfnis nach einer Justiereinrichtung, mit deren Hilfe sich die Justierung beispielsweise einer solchen Scheibenwischerträgereinheit gegenüber einem karosseriefesten Bestandteil vereinfacht.

Die vorliegende Erfindung beschäftigt sich mit dem Problem, für eine Justiereinrichtung der eingangs genannten Art eine einfach handhabbare Ausführungsform anzugeben, die außerdem relativ preiswert herstellbar ist.

Dieses Problem wird erfindungsgemäß durch eine Justiereinrichtung mit den Merkmalen des Anspruchs 1 gelöst. Mit Hilfe der erfindungsgemäßen Justiereinrichtung kann die Relativlage zwischen den beiden Bauteilen in Abhängigkeit der gewählten Gewindesteigung relativ genau eingestellt werden. Des weiteren ist diese Justierung relativ einfach durchführbar. Ein weiterer wichtiger Vorteil wird darin gesehen, daß die verwendeten Bestandteile der Justiereinrichtung preiswert herstellbar sind.

Das der Erfindung zugrundeliegende Problem wird außerdem durch ein Betätigungswerkzeug mit den Merkmalen des Anspruchs 7 gelöst. Mit dem erfindungsgemäßen Betätigungswerkzeug kann die erfindungsgemäße Justiereinrichtung besonders einfach zum Justieren der beiden Bauteile betätigt werden. Insgesamt vereinfacht sich dadurch der Justiervorgang und kann insbesondere problemlos in eine Serienfertigung integriert werden.

Das der Erfindung zugrundeliegende Problem wird auch durch eine Verwendung gemäß Anspruch 13 gelöst, mit deren Hilfe die Neigung einer Schwenkachse eines Scheibenwischers gegenüber einer Windschutzscheibe einstellbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: eine teilweise geschnittene Ansicht auf eine erfindungsgemäße Justiereinrichtung,
- Fig. 2: eine teilweise geschnittene Ansicht auf ein erfindungsgemäßes Betätigungswerkzeug und
- Fig. 3: eine perspektivische Ansicht auf eine spezielle Anwendungsform der erfindungsgemäßen Justiereinrichtung.

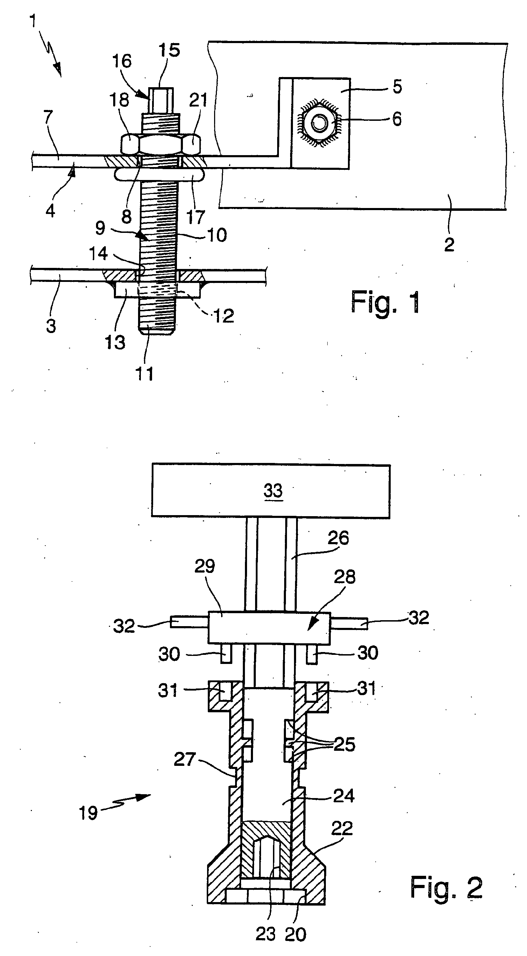

Entsprechend Fig. 1 soll mit Hilfe einer erfindungsgemäßen Justiereinrichtung 1 die Relativlage zwischen einem ersten Bauteil 2 und einem zweiten Bauteil 3 eingestellt und fixiert werden. Zu diesem Zweck besitzt die Justiereinrichtung 1 ein Trägerteil 4, das am ersten Bauteil 1 befestigt ist. Zur Befestigung weist das Trägerteil 4 hier eine Lasche 5 auf, an der eine Mutter 6 angeschweißt ist, sogenannte Schweißmutter. Mit Hilfe dieser Schweißmutter 6 ist das Trägerteil 4 am ersten Bauteil 1 fest anschraubbar. Zweckmäßig ist das Trägerteil 4 symmetrisch ausgebildet, so daß das Trägerteil 4 mit einer nicht dargestellten weiteren Lasche mit zugehöriger Schweißmutter am ersten Bauteil 2 befestigt ist. Das Trägerteil 4 weist außerdem einen vorzugsweise eben ausgebildeten Halterabschnitt 7 auf, der eine Durchgangsöffnung 8 enthält. Diese Durchgangsöffnung 8 kann beispielsweise schlitzförmig ausgebildet sein.

Die Justiereinrichtung 1 weist des weiteren eine Einstellschraube 9 auf, die ein Außengewinde 10 besitzt. Im Bereich ihres in Fig. 1 unten dargestellten ersten Endes 11 wirkt die Einstellschraube 9 mit einem Innengewinde 12 zusammen, das fest am zweiten Bauteil 3 angeordnet ist. Im hier dargestellten Ausführungsbeispiel ist dieses Innengewinde 12 an einer Schweißmutter 13 ausgebildet, die am zweiten Bauteil 3 angeschweißt ist. Das zweite Bauteil 3 weist fluchtend zum Innengewinde 12 eine Durchgangsöffnung 14 auf, durch die die Einstellschraube 9 mit Spiel durchgesteckt ist.

Die Einstellschraube 9 weist an ihrem in Fig. 1 oben dargestellten zweiten Ende 15 Drehbetätigungsmittel 16 auf, die hier in Form eines Außenmehrkants, insbesondere eines Außensechskants, ausgebildet sind. Bei einer anderen Ausführungsform können diese Drehbetätigungsmittel auch als Innenmehrkant, z.B. als Innenmehrkant oder Innentorx ausgebildet sein. Zwischen ihren Enden 11,15 trägt die Einstellschraube 9 einen radial nach außen abstehenden Bund 17, der fest an der Einstellschraube 9 ausgebildet ist. Vorzugsweise ist dieser Bund 17 an der Einstellschraube 9 angelötet oder angeschweißt, mit dieser verstemmt oder einteilig mit dieser hergestellt. Die Einstellschraube 9 durchdringt an einer vom zweiten Bauteil 3 abgewandten Seite des Bundes 17 die Durchtrittsöffnung 8 des Trägerteils 4. Die Durchtrittsöffnung 8 weist ein entsprechendes Spiel gegenüber der Einstellschraube 9 auf. Auf einer vom zweiten Bauteil 3 abgewandten Seite des Trägerteils 4 ist auf die Einstellschraube 9 eine Kontermutter 18 aufgeschraubt. Um diese Kontermutter 18 auch bei vorhandenem Bund 17 auf die Einstellschraube 9 aufbringen zu können, sind die Drehbetätigungsmittel 16 der Einstellschraube 9 zweckmäßig so dimensioniert, daß sie einen kleineren Außenquerschnitt aufweisen als das Außengewinde 10. Dadurch wird gewährleistet, daß die Kontermutter 18 über diese Drehbetätigungsmittel 16 auf das Außengewinde 10 aufschraubbar ist.

Die erfindungsgemäße Justiereinrichtung 1 arbeitet wie folgt: Zum Justieren der Relativlage zwischen erstem Bauteil 2 und zweitem Bauteil 3 wird die Kontermutter 18 relativ zur Einstellschraube 9 in Öffnungsrichtung so weit verdreht, bis die Einstellschraube 9 relativ zum Trägerteil 4 drehverstellbar ist. Das Trägerteil 4 ist dabei zwischen Kontermutter 18 und Bund 17 axial positioniert. Anschließend wird die Einstellschraube 9 gedreht. Durch diese Drehbetätigung der Einstellschraube 9 bewegt sich das zweite Bauteil 3 entlang der Einstellschraube 9 nach oben oder nach unten. Da die Einstellschraube 9 relativ zum Trägerteil 4 axial ortsfest ist und das Trägerteil 4 seinerseits fest mit dem ersten Bauteil 2 verbunden ist, ergibt sich dadurch eine Relativverstellung zwischen erstem Bauteil 2 und zweitem Bauteil 3. Sobald die gewünschte Relativlage zwischen den beiden Bauteilen 2 und 3 erreicht ist, wird die Kontermutter 18 relativ zur Einstellschraube 9 so verdreht, daß das Trägerteil 4 zwischen Bund 17 und Kontermutter 18 axial verspannt wird. Durch diese Verspannung ist die Drehlage der Einstellschraube 9 und somit die eingestellte Justierposition der beiden Bauteile 2 und 3 fixiert.

Entsprechend Fig. 2 weist ein erfindungsgemäßes Betätigungswerkzeug 19, das zum Betätigen der Justiereinrichtung 1 gemäß Fig. 1 verwendbar ist, einen äußeren Drehantrieb 20 auf, der komplementär zu Drehantriebsmitteln 21 der Kontermutter 18 ausgebildet ist. Im vorliegenden Ausführungsbeispiel besitzt die Kontermutter 18 einen Außenmehrkant, insbesondere einen Außensechskant, als Drehantriebsmittel 21; dementsprechend ist der äußere Drehantrieb 20 des Betätigungswerkzeugs 19 als Innenmehrkant, z.B. Innensechskant, ausgestaltet. Dieser äußere Drehantrieb 20 ist hier an einem hülsenförmigen Drehteil 22 ausgebildet.

Das Betätigungswerkzeug 19 weist außerdem einen inneren Drehantrieb 23 auf, der komplementär zu den Drehantriebsmitteln 16 der Einstellschraube 9 ausgebildet ist. Dementsprechend ist dieser innere Drehantrieb 23 hier als Innenmehrkant, speziell als Innensechskant, ausgestaltet. Der innere Drehantrieb 23 ist an einem zylindrischen Stab 24 ausgebildet, der konzentrisch im Drehteil 22 drehverstellbar angeordnet ist. Des weiteren ist der Stab 24 im Drehteil 22 axial verstellbar angeordnet, wobei Anschlagmittel 25 die axiale Verstellbarkeit zwischen Stab 24 und Drehteil 22 begrenzen.

Am Stab 24 sind entsprechend Fig. 2 oberhalb des Drehteils 22 erste Drehantriebsmittel 26 ausgebildet, mit denen der Stab 24 und somit der innere Drehantrieb 23 zur Durchführung einer Drehverstellung antreibbar ist. Diese ersten Drehantriebsmittel 26 sind hier in Form eines Außenmehrkants, insbesondere eines Außensechskants, ausgebildet, an dem ein geeignetes Werkzeug angreifen kann. Das Drehteil 22 weist zweite Drehantriebsmittel 27 auf, mit deren Hilfe das Drehteil 22 zur Durchführung einer Drehverstellung des äußeren Drehantriebs 20 antreibbar ist. Diese zweiten Drehantriebsmittel können ebenfalls als Außenmehrkant oder auch als parallele Flächen ausgestaltet sein, an denen ein entsprechendes Werkzeug, z.B. ein Schraubenschlüssel, insbesondere ein Gabelschlüssel, angreifen kann.

Das Betätigungswerkzeug 19 weist außerdem Kopplungsmittel 28 auf, die zwischen einem aktivierten Zustand und einem deaktivierten Zustand verstellbar sind. Im aktivierten Zustand bewirken diese Kopplungsmittel 28 eine drehfeste Kopplung zwischen äußerem Drehantrieb 20 und innerem Drenantrieb 23. Im deaktivierten Zustand ermöglichen die Kopplungsmittel 28 freie Relativverdrehungen zwischen innerem Drehantrieb 23 und äußerem Drehantrieb 20. Die Kopplungsmittel 28 bestehen im vorliegenden Fall aus einer Buchse 29, die in ihrem Inneren einen hier nicht gezeigten, komplementär zu den ersten Drehantriebsmitteln 26 geformten Durchgang enthält, so daß die Buchse 29 zwar axial entlang der ersten Drehantriebsmittel 26 verstellbar ist, jedoch über die ersten Drehantriebsmittel 26 drehfest mit dem Stab 24 und somit drehfest mit dem inneren Drehantrieb 23 verbunden ist. An der Buchse 29 sind an einer dem Drehteil 22 zugewandten axialen Seite mehrere axial abstehende Stifte 30 ausgebildet. Komplementär dazu sind an einer der Buchse 29 zugewandten axialen Stirnseite des Drehteils 22 entsprechende Stiftaufnahmen 31 ausgebildet. Im deaktivierten Zustand sind die Stifte 30 und die Stiftaufnahmen 31 außer Eingriff, so daß die Drehantriebe 20 und 23 relativ zueinander verdrehbar sind. Im aktivierten Zustand greifen die Stifte 30 in ihre Stiftaufnahmen 31 ein, wodurch das Drehteil 22 drehfest mit der Buchse 29 und somit drehfest mit dem Stab 24 verbunden ist. Hierdurch ergibt sich die drehfeste Kopplung zwischen den Drehantrieben 20 und 23.

An der Buchse 29 sind hier außerdem radial abstehende Arme 32 ausgebildet, die als Handgriffe verwendbar sind. Am Stab 24 ist an einem vom inneren Drehantrieb 23 abgewandten Ende ein Handgriff 33 angebracht, mit dem der innere Drehantrieb 23 über den Stab 24 drehend betätigbar ist.

Das erfindungsgemäße Betätigungswerkzeug 19 arbeitet wie folgt:

Zum Lösen der Kontermutter 18 wird der äußere Drehantrieb 20 auf die Drehantriebsmittel 21 der Kontermutter 18 aufgesteckt. Außerdem wird der innere Drehantrieb 23 auf die Drehantriebsmittel 16 der Einstellschraube 9 aufgesteckt. Die Kopplungsmittel 28 werden deaktiviert, so daß das Drehteil 22 relativ zum Stab 24 drehverstellbar ist. Dementsprechend kann die Kontermutter 18 relativ zur Einstellschraube 9 zum Lösen verdreht werden, indem das Drehteil 22 relativ zum Stab 24 verdreht wird. Zweckmäßig wird dabei der Stab 24 über den Handgriff 33 drehfest positioniert. Am Drehteil 22 sind oben zwei parallel gefräste Flächen zur Aufnahme eines Gabelschlüssels mit beispielsweise einer Schlüsselweite von SW 17 angeordnet.

Zum Justieren der Bauteile 2 und 3 werden nun die Kopplungsmittel 28 aktiviert, so daß Drehteil 22 und Stab 24 drehfest miteinander gekoppelt sind. Durch eine Drehbetätigung am Handgriff 33 werden nun Stab 24 und Drehteil 22 gemeinsam verdreht. In entsprechender Weise dreht sich dabei die Einstellschraube 9, ohne daß sich dabei die Relativlage der Kontermutter 18 bezüglich der Einstellschraube 9 verändert. Folglich bleibt die axiale Positionierung des Trägerteils 4 zwischen Bund 17 und Kontermutter 18 erhalten. Zum Fixieren der aufgefundenen Justierposition werden die Kopplungsmittel 28 wieder deaktiviert und bei festgehaltenem Handgriff 33 kann durch Verdrehen des Drehteils 22 die Kontermutter 18 wieder festgezogen werden. Die axiale Verstellbarkeit zwischen Stab 24 und Drehteil 22 gewährleistet eine maximale Überdeckung zwischen innerem Drehantrieb 23 und den Drehantriebsmitteln 16 der Einstellschraube 9 bzw. zwischen äußerem Drehantrieb 20 und den Drehantriebsmitteln 21 der Kontermutter 18 unabhängig von der Länge desjenigen Abschnitts der Einstellschraube 9, der an einer vom zweiten Bauteil 3 abgewandten Seite über die Kontermutter 18 übersteht.

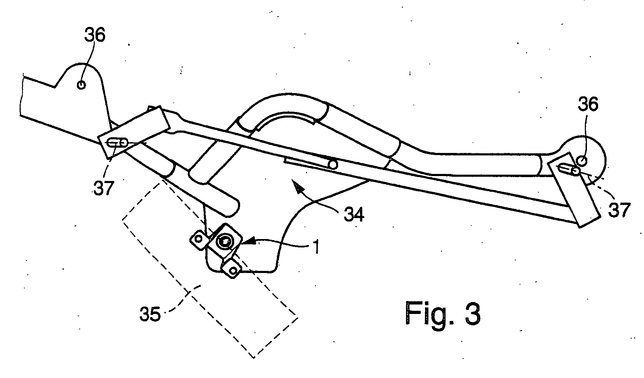

Entsprechend Fig. 3 eignet sich die erfindungsgemäße Justiereinrichtung 1 besonders gut zur Justierung einer Relativlage zwischen einer Scheibenwischerträgereinheit 34 und einer Spritzwand 35, die hier durch einen mit unterbrochenen Linien dargestellten Rahmen symbolisiert ist. Die Scheibenwischerträgereinheit 34 ist unterhalb einer nicht dargestellten Windschutzscheibe eines Kraftfahrzeugs, insbesondere eines Personenkraftwagens, über wenigstens zwei Befestigungsstellen 36 an der Fahrzeugkarosserie befestigt. Dabei sind diese Befestigungsstellen 36 mit Dämpfungsmitteln ausgestattet, die Relativbewegungen zwischen der Scheibenwischerträgereinheit 34 und der Fahrzeugkarosserie zulassen. Des weiteren ist die Scheibenwischerträgereinheit 34 über die Justiereinrichtung 1 an der Spritzwand 35 befestigt, wobei diese Spritzwand 35 im Motorraum des Kraftfahrzeugs angeordnet und fest mit der Fahrzeugkarosserie verbunden ist.

Mit Hilfe der Justiereinrichtung 1 kann nun die Relativlage zwischen der Scheibenwischerträgereinheit 34 und der Spritzwand 35 relativ genau eingestellt werden. Bei einer Drehbetätigung der Einstellschraube 9 ergibt sich bei feststehender Spritzwand 35 eine Kippbewegung der Scheibenwischerträgereinheit 34 um eine durch die Befestigungsstellen 36 hindurchgehende Gerade. Hierdurch kann die Neigung von Schwenkachsen 37 gegenüber der Windschutzscheibe eingestellt werden. Auf diesen Schwenkachsen 37 ist jeweils ein nicht gezeigter Scheibenwischer, insbesondere ein Flachbalken-Scheibenwischer, gelagert. Die mit der erfindungsgemäßen Justiereinrichtung 1 durchführbare Justierung ist relativ genau, da sich die Relativlage zwischen den beiden Bauteilen 34 und 35 bei einer Umdrehung der Einstellschraube 9 nur relativ geringfügig ändert. Bei der in Fig. 3 gezeigten speziellen Anwendungsform entspricht die Spritzwand 35 dem ersten Bauteil 2 aus Fig. 1, während die Scheibenwischerträgereinheit 34 das zweite Bauteil 3 gemäß Fig. 1 bildet.

Ein besonderer Vorteil der erfindungsgemäßen Justiereinrichtung 1, insbesondere in Verbindung mit dem erfindungsgemäßen Betätigungswerkzeug 19, wird darin gesehen, daß eine präzise Justierung und deren Fixierung relativ einfach und somit prozessicher und schnell durchführbar sind, so daß die Erfindung insbesondere in Verbindung mit einer Serienproduktion anwendbar ist. Des weiteren ist die erfindungsgemäße Justiereinrichtung relativ preiswert herstellbar.

## Patentansprüche

1. Einrichtung zum Justieren einer Relativlage zwischen zwei Bauteilen (2,3;35,34), mit einem Trägerteil (4), das an dem einen Bauteil (2;35) befestigt ist und in einem Halterabschnitt (7) eine Durchgangsöffnung (8) aufweist, und mit einer Einstellschraube (9), die
- ein Außengewinde (10) aufweist,
- im Bereich ihres einen Endes (11) in ein am anderen Bauteil (3;34) fest angeordnetes Innengewinde (12) eingreift,
- an ihrem anderen Ende (15) Drehbetätigungsmittel (16) aufweist,
- zwischen ihren Enden (11,15) einen radial abstehenden, festen Bund (17) aufweist,
- auf einer vom anderen Bauteil (3;34) abgewandten Seite des Bundes (17) die Durchgangsöffnung (8) durchdringt und
- auf einer vom anderen Bauteil (3;34) abgewandten Seite des Halterabschnitts (7) eine Kontermutter (18) trägt,
- wobei Bund (17) und Kontermutter (18) zum Fixieren einer Relativlage zwischen Einstellschraube (9) und Trägerteil (4) den Halterabschnitt (7) zwischen sich axial verspannen.

2. Justiereinrichtung nach Anspruch 1,
**dadurch gekennzeichnet,**
**daß** die Drehbetätigungsmittel (16) der Einstellschraube einen kleineren Außenquerschnitt aufweisen als das Außengewinde (10), derart, daß die Kontermutter (18) über die Drehbetätigungsmittel (16) auf das Außengewinde (10) der Einstellschraube (9) aufschraubbar ist.

3. Justiereinrichtung nach Anspruch 2,
**dadurch gekennzeichnet,**
**daß** die Drehbetätigungsmittel (16) der Einstellschraube (9) als Außenmehrkant oder als Innenmehrkant ausgebildet sind.

4. Justiereinrichtung nach einem der Ansprüche 1 bis 3,
**dadurch gekennzeichnet,**
**daß** die Durchgangsöffnung (8) radiales Spiel zum Außengewinde (10) der Einstellschraube (9) besitzt.

5. Justiereinrichtung nach einem der Ansprüche 1 bis 4,
**dadurch gekennzeichnet,**
**daß** eines der Bauteile (3) durch eine Scheibenwischerträgereinheit (34) gebildet ist, das zur Halterung eines oder mehrerer Scheibenwischer eines Kraftfahrzeugs dient, wobei das andere Bauteil (2) durch ein Karosseriebestandteil oder durch ein karosseriefestes Element (35) gebildet ist.

6. Justiereinrichtung nach Anspruch 5,
**dadurch gekennzeichnet,**
**daß** das andere Bauteil (2) durch eine im Motorraum des Kraftfahrzeugs angeordnete, fest mit der Karosserie verbundene Spritzwand (35) gebildet ist.

7. Werkzeug zum Betätigen einer Justiereinrichtung (1) nach einem der der Ansprüche 1 bis 6,
- mit einem äußeren Drehantrieb (20), der komplementär zu Drehantriebsmitteln (21) der Kontermutter (18) ausgebildet ist,
- mit einem inneren Drehantrieb (23), der komplementär zu den Drehantriebsmitteln (16) der Einstellschraube (9) ausgebildet ist,
- wobei innerer Drehantrieb (23) und äußerer Drehantrieb (20) relativ zueinander verdrehbar ausgebildet sind und
- wobei Kopplungsmittel (28) vorgesehen sind, die in einem aktivierten Zustand den inneren Drehantrieb (23) und den äußeren Drehantrieb (20) drehfest miteinander koppeln und in einem deaktivierten Zustand Relativverdrehungen zwischen innerem Drehantrieb (23) und äußerem Drehantrieb (20) ermöglichen.

8. Betätigungswerkzeug nach Anspruch 7,
**dadurch gekennzeichnet,**
**daß** der inneren Drehantrieb (23) relativ zum äußeren Drehantrieb (20) axial verstellbar ausgebildet ist.

9. Betätigungswerkzeug nach Anspruch 7 oder 8,
**dadurch gekennzeichnet,**
**daß** ein erster Handgriff (33) zur Drehbetätigung des inneren Drehantriebs (23) vorgesehen ist.

10. Betätigungswerkzeug nach einem der Ansprüche 7 bis 9,
**dadurch gekennzeichnet,**
**daß** ein zweiter Handgriff zur Drehbetätigung des äußeren Drehantriebs (20) vorgesehen ist.

11. Betätigungswerkzeug nach einem der Ansprüche 7 bis 10,
**dadurch gekennzeichnet,**
**daß** erste Drehantriebsmittel (26) zur Drehbetätigung des inneren Drehantriebs (23) mittels eines Werkzeuges vorgesehen sind.

12. Betätigungswerkzeug nach einem der Ansprüche 7 bis 11,
**dadurch gekennzeichnet,**
**daß** zweite Drehantriebsmittel (27) zur Drehbetätigung des äußeren Drehantriebs (20) mittels eines Werkzeuges vorgesehen sind.

13. Verwendung einer Justiereinrichtung (1) nach einem der Ansprüche 1 bis 6 zum Justieren der Relativlage zwischen einer Scheibenwischerträgereinheit (34), die zum Lagern eines oder mehrerer Scheibenwischer eines Kraftfahrzeugs dient, und einem Karosseriebestandteil oder einem karosseriefesten Element (35) des Kraftfahrzeugs.
